# EUROPEAN PATENT APPLICATION

(11) **EP 4 597 784 A1**
(43) Date of publication of application: **06.08.2025**
(21) Application number: 24157210.6
(22) Date of filing: 12.02.2024
(51) Int. Cl.: H02J 7/00, A24F 40/90, A24F 40/95

(54) **METHOD, APPARATUS AND COMPUTER PROGRAM FOR SIMULTANEOUS CHARGING OF AN AEROSOL PROVISION DEVICE AND A CHARGING APPARATUS**

(30) Priority: 31.01.2024 CN 202410141293; 31.01.2024 CN 202410142928
(71) Applicant: Nicoventures Trading Limited, London WC2R 3LA (GB)
(72) Inventor: WEI, Shao, Shenzhen (CN); WEI, Wei, Shenzhen (CN)
(74) Representative: Cork, Robert

(57) **Abstract**

A method of simultaneously charging a first rechargeable power source of a non-combustible aerosol provision device and a second rechargeable power source of a charging apparatus from an external power supply is disclosed, together with a corresponding charging apparatus, computer program, and computer-readable storage medium. The charging apparatus comprises an apparatus for charging the first rechargeable power source of the non-combustible aerosol provision device independently of said external power supply. The method comprises: allocating a charging capacity of the external power supply to the non-combustible aerosol provision device and to the charging apparatus, by assigning a first initial allocation to the non-combustible aerosol provision device and assigning a predefined second initial allocation to the second rechargeable power source; and simultaneously charging the first and second rechargeable power sources by directing electrical power from the external power supply to the non-combustible aerosol provision device and the second rechargeable power source according to the first initial allocation and the second initial allocation, respectively. The predefined second initial allocation assigned to the second rechargeable power source is less than the first initial allocation assigned to the non-combustible aerosol provision device.

## Description

### Technical Field

The present invention relates to charging of aerosol provision devices. In particular, the present invention relates to methods, apparatus and computer programs for simultaneous charging of an aerosol provision device and of a charging apparatus.

### Background

Smoking articles, such as cigarettes, cigars and the like burn tobacco during use to create tobacco smoke. Attempts have been made to provide alternatives to these articles by creating products that release compounds without combusting. For example, tobacco heating devices heat an aerosol provision substrate such as tobacco to form an aerosol by heating, but not burning, the substrate. There remains a need for further developments in this field.

### Summary of the Invention

According to a first aspect of the present disclosure, there is provided a method of simultaneously charging a first rechargeable power source of a non-combustible aerosol provision device and a second rechargeable power source of a charging apparatus from an external power supply, the charging apparatus comprising an apparatus for charging the first rechargeable power source of the non-combustible aerosol provision device independently of said external power supply, the method comprising: allocating a charging capacity of the external power supply to the non-combustible aerosol provision device and to the charging apparatus, by assigning a first initial allocation to the non-combustible aerosol provision device and assigning a predefined second initial allocation to the second rechargeable power source; and simultaneously charging the first and second rechargeable power sources by directing electrical power from the external power supply to the non-combustible aerosol provision device and the second rechargeable power source according to the first initial allocation and the second initial allocation, respectively, wherein the predefined second initial allocation assigned to the second rechargeable power source is less than the first initial allocation assigned to the non-combustible aerosol provision device.

In some embodiments according to the first aspect, the predefined second initial allocation is substantially less than the first initial allocation.

In some embodiments according to the first aspect, the charging apparatus comprises a first controller for controlling one or more functions of the charging apparatus, and the predefined second initial allocation corresponds to a charging voltage greater than or equal to a minimum operating voltage required by the first controller.

In some embodiments according to the first aspect, the predefined second initial allocation corresponds to a charging current of about 100 milliamps.

In some embodiments according to the first aspect, the charging apparatus comprises a second controller for directing said electrical power from the external power supply to the non-combustible aerosol provision device and to the second rechargeable power source, and wherein said method is implemented by the second controller.

In some embodiments according to the first aspect, said charging capacity of the external power supply is known to the second controller.

In some embodiments according to the first aspect, the first initial allocation is determined based on a difference between said charging capacity and the predefined second initial allocation.

In some embodiments according to the first aspect, the predefined second initial allocation comprises a predefined portion of said charging capacity.

In some embodiments according to the first aspect, the predefined portion is defined as a percentage of the charging capacity.

In some embodiments according to the first aspect, said charging capacity of the external power supply is not known to the second controller.

In some embodiments according to the first aspect, the first initial allocation is an unlimited allocation such that during the simultaneous charging, the second controller supplies the electrical power to the second rechargeable power source according to the second initial allocation and permits the non-combustible aerosol provision device to draw electrical power at a level determined by the non-combustible aerosol provision device.

In some embodiments according to the first aspect, the method further comprises: whilst said simultaneous charging is ongoing, monitoring a level at which the non-combustible aerosol provision device is drawing said electrical power to determine an extent to which the non-combustible aerosol provision device is utilising its allocated charging capacity; and according to a result of the determination: continuing charging based on the first initial allocation and the predefined second initial allocation; or determining an updated second allocation higher than the predefined second initial allocation and an updated first allocation lower than the first initial allocation, thereby allocating additional charging capacity to the charging apparatus, and continuing charging based on the updated first allocation and the updated second allocation.

In some embodiments according to the first aspect, determining the extent to which the non-combustible aerosol provision device is utilising its allocated charging capacity comprises comparing the level at which the non-combustible aerosol provision device is drawing said electrical power to a first threshold, wherein charging is continued based on the first initial allocation and the predefined second initial allocation in response to a determination that the level at which the non-combustible aerosol provision device is drawing said electrical power is above the first threshold.

In some embodiments according to the first aspect, determining the extent to which the non-combustible aerosol provision device is utilising its allocated charging capacity comprises determining a difference between the level at which the non-combustible aerosol provision device is drawing said electrical power and a level corresponding to a predetermined utilisation of the first initial allocation, and comparing said difference to a second threshold, wherein charging is continued based on the first initial allocation and the predefined second initial allocation in response to a determination that said difference is below the second threshold.

In some embodiments according to the first aspect, said electrical power is supplied to the non-combustible aerosol provision device via a first electrical interface, and said electrical power is received from the external power supply via a second electrical interface.

According to a second aspect of the present disclosure, there is provided a computer program comprising software instructions which, when executed on one or more processors, cause performance of a method according to the first aspect.

According to a third aspect of the present disclosure, there is provided a non-transitory computer-readable storage medium arranged to store a computer program according to the second aspect.

According to a fourth aspect of the present disclosure, there is provided a charging controller for simultaneously charging a first rechargeable power source of a non-combustible aerosol provision device and a second rechargeable power source of a charging apparatus from the same external power supply, the charging apparatus comprising an apparatus for charging the first rechargeable power source of the non-combustible aerosol provision device independently of said external power supply, wherein, in use, the charging controller is configured to: allocate a charging capacity of the external power supply to the non-combustible aerosol provision device and to the charging apparatus, by assigning a first initial allocation to the non-combustible aerosol provision device and assigning a predefined second initial allocation to the second rechargeable power source; and simultaneously charge the first and second rechargeable power sources by directing electrical power from the external power supply to the non-combustible aerosol provision device and to the second rechargeable power source according to the first initial allocation and the second initial allocation, respectively, wherein the predefined second initial allocation assigned to the second rechargeable power source is less than the first initial allocation assigned to the non-combustible aerosol provision device.

According to a fifth aspect of the present disclosure, there is provided a charging apparatus for recharging a first rechargeable power source of a non-combustible aerosol provision device, the charging apparatus comprising: a charging controller according to the fourth aspect; and the second rechargeable power source.

### Brief Description of the Drawings

Embodiments of the present invention will now be described, by way of example only, with reference to the accompanying drawings, in which:
Figure 1 is a block diagram of a rechargeable non-combustible aerosol provision device, according to an example embodiment;
Figure 2 is a block diagram of a system comprising the rechargeable non-combustible aerosol provision device of Fig. 1 and an apparatus for recharging the aerosol provision device, according to an example embodiment;
Figure 3 is a flowchart showing a method of simultaneously charging respective power sources of an aerosol provision device and a charging apparatus, according to an example embodiment;
Figure 4 illustrates a structure of charging control circuitry, according to an example embodiment;
Figure 5 is a flowchart showing a method of simultaneously charging respective power sources of an aerosol provision device and a charging apparatus in a scenario where the available charging capacity of an external power supply is known to a charging controller, according to an example embodiment;
Figure 6 is a flowchart showing a method of simultaneously charging respective power sources of an aerosol provision device and a charging apparatus in a scenario where the available charging capacity of an external power supply is unknown to a charging controller, according to an example embodiment; and
Figure 7 is a flowchart showing a method of simultaneously charging respective power sources of an aerosol provision device and a charging apparatus according to whether the available charging capacity of an external power supply is known in advance, according to an example embodiment.

### Detailed Description

In the following detailed description, only certain exemplary embodiments of the present invention have been shown and described, simply by way of illustration. As those skilled in the art would realise, the described embodiments may be modified in various ways, all without departing from the scope of the present invention. Accordingly, the drawings and description are to be regarded as illustrative in nature and not restrictive. Like reference numerals designate like elements throughout the specification.

As used herein, the term "delivery system" is intended to encompass systems that deliver at least one substance to a user, and includes non-combustible aerosol provision systems that release compounds from an aerosol-generating material without combusting the aerosol-generating material, such as electronic cigarettes, tobacco heating products, and hybrid systems to generate aerosol using a combination of aerosol-generating materials.

According to the present disclosure, a "combustible" aerosol provision system is one where a constituent aerosol-generating material of the aerosol provision system (or component thereof) is combusted or burned during use in order to facilitate delivery of at least one substance to a user. According to the present disclosure, a "non-combustible" aerosol provision system is one where a constituent aerosol-generating material of the aerosol provision system (or component thereof) is not combusted or burned in order to facilitate delivery of at least one substance to a user. The non-combustible aerosol provision system, or a non-combustible aerosol provision device thereof, may comprise a power source and a controller.

In some embodiments the delivery system is a non-combustible aerosol provision system, such as an electronic cigarette, also known as a vaping device or electronic nicotine delivery system (END), although it is noted that the presence of nicotine in the aerosol generating material is not a requirement. In some embodiments, the non-combustible aerosol provision system is an aerosol-generating material heating system, also known as a heat-not-burn system. An example of such a system is a tobacco heating system. In some embodiments, the non-combustible aerosol provision system is a hybrid system to generate aerosol using a combination of aerosol-generating materials, one or a plurality of which may be heated. Each of the aerosol-generating materials may be, for example, in the form of a solid, liquid or gel and may or may not contain nicotine. In some embodiments, the hybrid system comprises a liquid or gel aerosol-generating material and a solid aerosol-generating material. The solid aerosol-generating material may comprise, for example, tobacco or a non-tobacco product.

Typically, the non-combustible aerosol provision system may comprise a non-combustible aerosol provision device and a consumable for use with the non-combustible aerosol provision device. A non-combustible aerosol provision device may also be referred to as a non-combustible aerosol generation device. In some embodiments, the disclosure relates to consumables comprising aerosol generating material and configured to be used with non-combustible aerosol provision devices. These consumables are sometimes referred to as articles throughout the disclosure. A consumable is an article comprising or consisting of aerosol-generating material, part or all of which is intended to be consumed during use by a user.

In some embodiments, the non-combustible aerosol provision system may comprise an area for receiving the consumable, an aerosol generator, an aerosol generation area, a housing, a mouthpiece, a filter and/or an aerosol-modifying agent.

A consumable is an article comprising or consisting of aerosol-generating material, part or all of which is intended to be consumed during use by a user. In some embodiments, the consumable for use with the non-combustible aerosol provision device may comprise aerosol-generating material, an aerosol-generating material storage area, an aerosol-generating material transfer component, an aerosol generator, an aerosol generation area, a housing, a wrapper, a filter, a mouthpiece, and/or an aerosol-modifying agent. A consumable may also comprise an aerosol generator, such as a heater, that emits heat to cause the aerosol-generating material to generate aerosol in use. The heater may, for example, comprise combustible material, a material heatable by electrical conduction, or a susceptor. In other embodiments, the aerosol-generating material may be provided in the non-combustible aerosol provision device itself rather than being provided in a physically separate consumable. In such embodiments, the non-combustible aerosol provision device may comprise an aerosol-generating material storage area for storing the aerosol-generating material.

In some embodiments, the substance to be delivered may be an aerosol-generating material or a material that is not intended to be aerosolised. As appropriate, either material may comprise one or more active constituents, one or more flavours, one or more aerosol-former materials, and/or one or more other functional materials.

In some embodiments, the substance to be delivered comprises an active substance. The active substance as used herein may be a physiologically active material, which is a material intended to achieve or enhance a physiological response. Aerosol-generating material is a material that is capable of generating aerosol, for example when heated, irradiated or energized in any other way. Aerosol-generating material may, for example, be in the form of a solid, liquid, gel, thin film, foam, or non-fibrous solid, any of which may or may not contain an active substance and/or flavourants.

The aerosol-generating material may comprise one or more active substances and/or flavours, one or more aerosol-former materials, and optionally one or more other functional materials.

The material may be present on or in a support, to form a substrate. The support may, for example, be or comprise paper, card, paperboard, cardboard, reconstituted material, a plastics material, a ceramic material, a composite material, glass, a metal, or a metal alloy. In some embodiments, the support comprises a susceptor. In some embodiments, the susceptor is embedded within the material. In some alternative embodiments, the susceptor is on one or either side of the material.

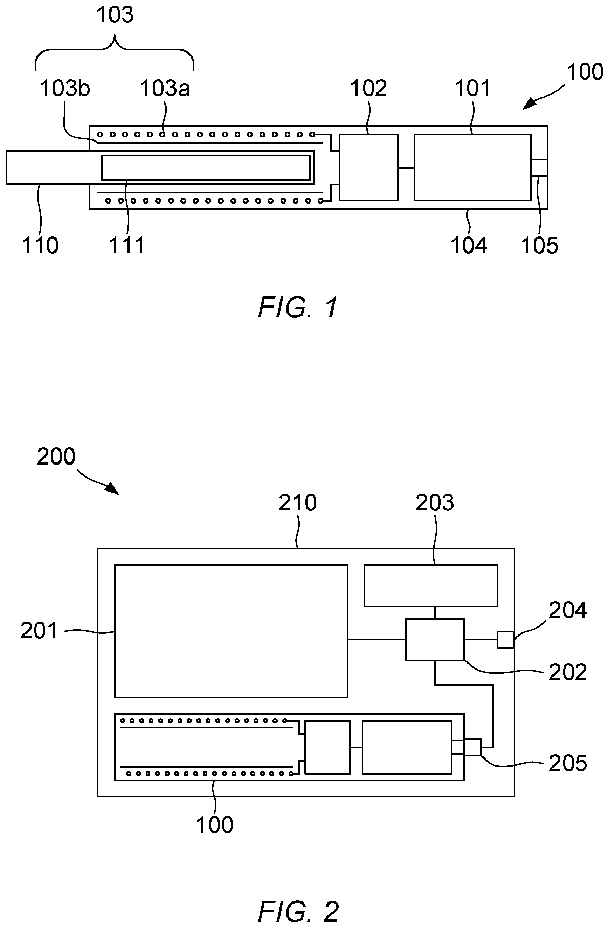

Referring now to Fig. 1, a block diagram of a rechargeable non-combustible aerosol provision device, indicated generally by the reference numeral 100, is illustrated in accordance with an example embodiment. The non-combustible aerosol provision device 100 comprises at least one power source 101, circuitry 102, at least one aerosol generator 103, a housing 104 and a charging interface 105.

The circuitry 102 may be configured to control a supply of electrical power to the at least one power source 101 during a charging operation, to charge the power source 101 from a discharged state to a charged state (e.g. 80%, 90% or 100% charge). The discharged state may vary according to usage of the device 100, depending on how far the power source 101 has been discharged when a user connects the charging interface 105 to an external power source (e.g. to the charging apparatus 200 of Fig. 2) to begin charging the device 100. In general, the discharged state may be any state in which the output voltage of the power source 101 is greater than or equal to a minimum operating voltage threshold *Vₜ* required by the circuitry 102 (e.g. a controller such as a master control unit, MCU) in the device 100, since as soon as the output voltage of the power source 101 falls below that level (i.e. *Vₜ*) the device 100 will no longer be operable (i.e. preventing the power source 101 from being further discharged) until the power source 101 has been charged to a higher level.

The non-combustible aerosol provision device 100 of the present embodiment is configured to receive a consumable 110 comprising aerosol-generating material 111 (e.g. a tobacco consumable 110, for example in the form of a tobacco stick). In other embodiments, the non-combustible aerosol provision device 100 may comprise the aerosol-generating material, for example, contained in an aerosol-generating material storage area within the non-combustible aerosol provision device 100. In embodiments in which the non-combustible aerosol provision device 100 contains aerosol-generating material, the non-combustible aerosol provision device 100 may or may not be configured to receive a consumable 110. For example, in some embodiments the non-combustible aerosol provision device 100 may be configured to receive a consumable containing additional aerosol-generating material, in addition to aerosol-generating material being contained in the device 100. In other such embodiments, the non-combustible aerosol provision device 100 may not be configured to receive a consumable 110, such that once the aerosol-generating material contained in the non-combustible aerosol provision device 100 is depleted, the device 100 can either be disposed or can be refilled with more aerosol-generating material (e.g. by refilling a liquid reservoir in the non-combustible aerosol provision device 100).

The at least one power source 101 is rechargeable, and can be recharged using electrical energy received via the charging interface 105. The power source 101 provides power to the aerosol generator 103 to generate the aerosol, and may also provide power to other components of the non-combustible aerosol provision device 100 (e.g. active components within circuitry 102) during operation of the device 100. Depending on the embodiment, the charging interface 105 may comprise a wired interface or a wireless interface. In the case of wireless charging, the charging interface 105 may comprise a resonant receiver, for example in the form of an antenna. The antenna of the resonant receiver may be used to receive magnetic field energy for use in charging the power source 101 (e.g. under the control of the circuitry 102).

The housing 105 can be configured to contain, hold, or otherwise support some or all of the other components of the non-combustible aerosol provision device 100. The housing 105 may be formed of any suitable material, including but not limited to paper, card, paperboard, cardboard, reconstituted material, a plastics material, a ceramic material, a composite material (e.g. carbon fibre), glass, a metal, or a metal alloy. In some embodiments the housing 105 can be configured so as to allow one or more components of the non-combustible aerosol provision device 100 to be removed and replaced. For example, the housing 105 may comprise a moveable or removable portion (e.g. in the form of a panel, cover, cap or plug) to enable access to components such as the circuitry 102, the power source 101 and/or the aerosol generator 103, potentially to allow such components to be removed and replaced to repair or upgrade the device 100, or to allow such components to be removed prior to disposal of the device 100 (e.g. to allow different materials used in the device 100 to be separated for disposal/recycling). In some embodiments, the housing 105 is configured to enable the power source 101 to be removed and replaced.

In the use of the device 100, the consumable 110 is inserted into a receiving portion of the housing 105, such that the consumable 110 may be heated by the aerosol generator 103 to generate an aerosol (and tobacco flavour, in the case of a tobacco consumable) for the user. When a user inhales at the end of the consumable 110, which may be referred to as a "puff", air is drawn into the device 100 through one or more air inlets and passes through the consumable 110, delivering the aerosol (and tobacco flavour, in the case of a tobacco consumable) to the user.

In the present embodiment, the aerosol generator 103 is an induction heater comprising an induction coil 103a and a susceptor 103b. In use, the circuitry 102 directs electrical energy from the power source 101 to the induction coil 103a, so as to cause a varying electrical current to flow through the induction coil 103a. This in turn creates a varying magnetic field which penetrates an electrically-conductive material of the susceptor 103b, causing magnetic hysteresis heating of the susceptor 103b. The consumable 110, and the aerosol-generating material 111 contained therein, is arranged to be heated by the susceptor 103b. In the present embodiment the susceptor 103b is provided in the device 100, for example within the housing 105. However, in other embodiments the susceptor 103b may be provided in the consumable 110.

Although in the present embodiment induction heating is used to generate an aerosol, in other embodiments a different mechanism may be used to generate the aerosol. For example, in some embodiments the non-combustible aerosol provision device 100 may still be configured to receive a consumable comprising tobacco (e.g. in the form of a tobacco stick) as shown in Fig. 1, but instead of an induction coil 103a and susceptor 103b the aerosol generator 103 may comprise a resistive heater. In embodiments in which tobacco is heated by a resistive heater, the aerosol generator 103 (i.e. the resistive heater) may be arranged so as to be in physical contact with at least some of the tobacco material contained in the consumable 110, when the consumable is received in the device 100. For example, this may be achieved by providing a resistive heater in the form of a protruding element, such as a spike or blade, that is pushed into the tobacco 111 in the process of inserting the consumable 110 into the device 100.

The non-combustible aerosol provision device 100 is described by way of example only. Many alternative aerosol provision devices may be used in example implementations of the principles described here. For example, instead of a tobacco heating system such as the device 100 illustrated in Fig. 1, in other embodiments a non-combustible aerosol provision device may be a vaping device in which an aerosol generating material (e.g. a liquid) is heated to generate the aerosol. The principles of the present disclosure are not limited to a particular type of aerosol provision device 100. That is to say, the aerosol provision device 100 may be arranged to aerosolise a solid, liquid or other aerosol-generating material via any suitable electrically powered or controller aerosol generator, such as a heater, a vibrating mesh, a source of irradiation, an electrically controller pressurised cannister which may include an electrically operated release valve, and so on.

Hence, in some embodiments the at least one aerosol generator 103 may be configured to generate an aerosol from the aerosol-generating material without heating, for example by using one or more of the following: vibration, pressure, or electrostatic energy. Examples of non-heating aerosol generators include an ultrasonic vaporiser, and a surface acoustic wave vaporiser. In embodiments in which the aerosol generator 103 is configured to generate the aerosol by heating the aerosol-generating material, the aerosol generator 103 may comprise any one of the following: an induction heater, an electromagnetic (EM) radiation heater (e.g. a laser heater, a non-laser optical heater, an infra-red heater, a radio-frequency heater, or a microwave frequency heater), a plasma heater, a microfluidic heater, a convection heater, a conduction heater, an electro-resistive heater (e.g. a graphene heater or ceramic heater), a halogen heater, a dielectric heater.

In embodiments in which the non-combustible aerosol provision device 100 is a so-called vaping device, the non-combustible aerosol provision device 100 may form part of an aerosol provision system comprising a modular assembly, often having two main functional parts, namely the aerosol provision device 100 and an article 110. In such embodiments the article 110 may comprise the consumable aerosol-generating material 111 and the aerosol generator 103 (e.g. a resistive or inductive heating element), while the aerosol provision device 100 part may comprise longer-life items, such as the rechargeable power source 101, circuitry 102, and other components such as user interface features. The aerosol provision device 100 may also be referred to as a reusable part or battery section, and the article 110 may also be referred to as a consumable, disposable/replaceable part, cartridge or cartomiser.

In both tobacco heating systems and vaping systems, the aerosol provision device 100 and article 110 may be mechanically coupled together at an interface for use, for example using a screw thread, bayonet, latched or friction fit fixing. When the aerosol-generating material in an article 110 has been exhausted, or the user wishes to switch to a different article having a different aerosol-generating material (e.g. a different composition, such as a different flavour), the article 110 may be removed from the aerosol provision device 100 and a replacement article may be attached to the device 100 in its place. Alternatively, in some embodiments an article 110 is configured such that, after the aerosol-generating material 111 in the article 110 has been exhausted, the article 110 can be refilled with more aerosol-generating material 111 (e.g. more tobacco in the case of a tobacco heating system, or more liquid in the case of a vaping systems), thereby allowing the article 110 to be reused. In some such embodiments, the user is able to refill the article 110 using a separate reservoir of aerosol-generating material 111. The aerosol-generating material used to refill the article may be the same or different to the previous aerosol-generating material in the article, thereby allowing the user to change to a different aerosol-generating material 111 without purchasing a new article 110.

As noted above, the at least one power source 101 is rechargeable. A system comprising the rechargeable non-combustible aerosol provision device 100 of Fig. 1 and an apparatus 200 for recharging the aerosol provision device will 100 now be described with reference to Fig. 2, according to an example embodiment. For example, the apparatus 200 for recharging the non-combustible aerosol provision device 100 may be referred to as a "charging apparatus", "charger", or a "charging case" or "charging pack", depending on its physical form.

In Fig. 2 the apparatus 200 is shown in the form of a charging case or charging pack, comprising a housing 210 having a space in which the non-combustible aerosol provision device 100 may be received during charging. In such embodiments the apparatus 200 may perform a dual function, by acting as a case or pack for protecting the non-combustible aerosol provision device 100 (e.g. while it is being carried by a user) whilst simultaneously charging the power source 101 of the non-combustible aerosol provision device 100. In other embodiments the charging apparatus may have a different form, for example, as a power pack connectable to the charging interface 105 of the non-combustible aerosol provision device 100 via a suitable charging cable or via an induction charging interface.

The charging apparatus 200 of the present example embodiment comprises at least one charging power source 201, charging control circuitry 202, a first power interface 203, a second power interface 204, and a device interface 205. The charging apparatus 200 may in some embodiments comprise one or more user interface components, such as light emitting diodes (LEDs), digital displays, haptic feedback generators and/or audio speakers. The one or more user interface components may be used to convey information to a user about a status of the charging apparatus 200 and/or the non-combustible aerosol provision device 100. In some embodiments the user interface component(s) may be omitted.

The first and second power interfaces 203, 204 each comprise an interface capable of receiving power from one or more external sources of electrical power, for example the mains electrical supply or another electrical device such as a tablet, laptop or desktop computer, smartphone, and so on. Depending on the embodiment, the first and second power interfaces 203, 204 may be the same type of interface or may be different interfaces. For example, the first and second power interfaces 203, 204 may both be wired interfaces or may both be wireless interfaces, or one of the first and second power interfaces 203, 204 may be a wired interface whilst the other is a wired interface. In the present embodiment, the first power interface 203 is a wireless charging interface and the second power interface 204 is a wired interface. The first power interface 203 may comprise a resonant receiver, for example in the form of an antenna. The antenna of the resonant receiver may be used to receive magnetic field energy for use in charging the charging power source 201 (e.g. under the control of the charging control circuitry 202). In some embodiments, the second power interface 204 may be a standardised interface such as a Universal Serial Bus-C (USB-C) type connector via which the charging apparatus 200 can be connected to and recharged from any device capable of providing power via a USB-C interface. It should be noted that a USB-C interface is described here purely by way of an illustrative example, and should not be construed as limiting. In other example embodiments, the second power interface 204 may comprise a different type of charging interface other than USB-C. Furthermore, in some embodiments one of the first and second power interfaces 203, 204 may be omitted, such that the charging apparatus 200 only comprises a single interface for receiving power from an external source.

The charging control circuitry 202 is configured to control the flow of electrical power from the charging power source 201 and/or from the external power interface 204 to the non-combustible aerosol provision device 100 via the device interface 205, to recharge the power source 101 of the non-combustible aerosol provision device 100. The charging power source 201 is configured to store energy that can be used to charge the power source 105 of the non-combustible aerosol provision device 100. For example, the charging power source 201 may comprise a battery, capacitor, supercapacitor or any other suitable power source capable of storing and providing electrical energy.

Hence, by virtue of including the charging power source 201, the charging apparatus 200 can be used to charge the power source 101 of the non-combustible aerosol provision device 100 independently of an external power supply (i.e. when neither the charging apparatus 200 or the non-combustible aerosol provision device 100 is connected to the external power supply). The charging apparatus 200 may therefore enable so-called "on-the-go" charging, whereby a user can use the charging apparatus 200 to recharge the power source 101 of the non-combustible aerosol provision device 100 when they are out and about (e.g. when they do not have access to an external power supply to recharge the device's power source 101).

During a charging operation in which one or both of the first and second power interfaces 203, 204 is connected to a respective external power source, which may be same power source for each of the first and second power interfaces 203, 204 or may be different respective external power sources, and when the charging power source 201 and the power source 101 of the non-combustible aerosol provision device 100 are both in a discharged state (which may be wholly or partially discharged), the charging control circuitry 202 is configured to control a simultaneous supply of electrical power to the charging power source 201 and to the non-combustible aerosol provision device 100. In this way, the respective power sources 101, 201 of the charging apparatus 200 and the non-combustible aerosol provision device 100 (i.e. the charging power source 201 of the charging apparatus 200 and the power source 101 of the non-combustible aerosol provision device 100) can both be charged simultaneously, as opposed to having to wait for one of the power sources 101, 201 to be charged first before proceeding to charge the other one of the power sources 101, 201. The external power source(s) to which the first and second power interfaces 203, 204 can be connected may be referred to as an external power supply, or simply "power supply", to avoid confusion with the power sources 101, 201 of the non-combustible aerosol provision device 100 and the charging apparatus 200. In the present disclosure, the terms "external power source", "external power supply" and "power supply" are used interchangeably.

Throughout the present disclosure, the power source 101 of the non-combustible aerosol provision device 100 and the charging power source 201 of the charging apparatus 200 are sometimes referred to as being in a "charged state" or a "discharged state". Depending on the embodiment the charged state may be a 100% state of charge (SOC), or may be a defined lower state of charge, e.g. 80% or 90% SOC. For example, in some embodiments charging may be intended to be terminated before the power source 101, 201 reaches a 100% SOC, e.g. to extend a total operating life of the power source 101, 201. The term "discharged state" can refer to any state of charge below the SOC level defined for the charged state, in a given embodiment. In practice, the discharged state of either power source 101, 201 at the beginning of a charging operation may vary according to usage of the non-combustible aerosol provision device 100 and the charging apparatus 200, depending on how far the power source 101, 201 has been discharged when a user connects the first power interface 203 and/or the second power interface 204 to an external power source. In other words, the "discharged state" encompasses fully-discharged and partiallydischarged states.

Furthermore, in this context "fully discharged" may not necessarily imply that the power source 101, 201 no longer stores any energy. In practice, circuitry within a device (e.g. circuitry 102 of the non-combustible aerosol provision device 100, and circuitry 202 of the charging apparatus 200) may require a minimum operating voltage threshold *Vₜ* to be able to function, such that once the output voltage of the power source 101, 201 falls below that level (i.e. *Vₜ*) the respective device (e.g. the non-combustible aerosol provision device 100 or the charging apparatus 200) will no longer be capable of operating. At that point, it may not be possible to discharge the power source 101, 201 any further, since the device 100, 200 can no longer be operated to draw power from the power source 101, 201. In such circumstances, the power source 101, 201 may be referred to as being "fully discharged" for purposes of the present disclosure, even though in reality there may still be a finite amount of energy stored within the power source 101, 201. In general, the discharged state may be any state in which the output voltage of the power source 101 is greater than or equal to a minimum operating voltage threshold *Vₜ* required by the circuitry 102 (e.g. a controller such as a master control unit, MCU) in the device 100, since as soon as the output voltage of the power source 101 falls below that level (i.e. *Vₜ*) the device 100 will no longer be operable (i.e. preventing the power source 101 from being further discharged) until the power source 101 has been charged to a higher level.

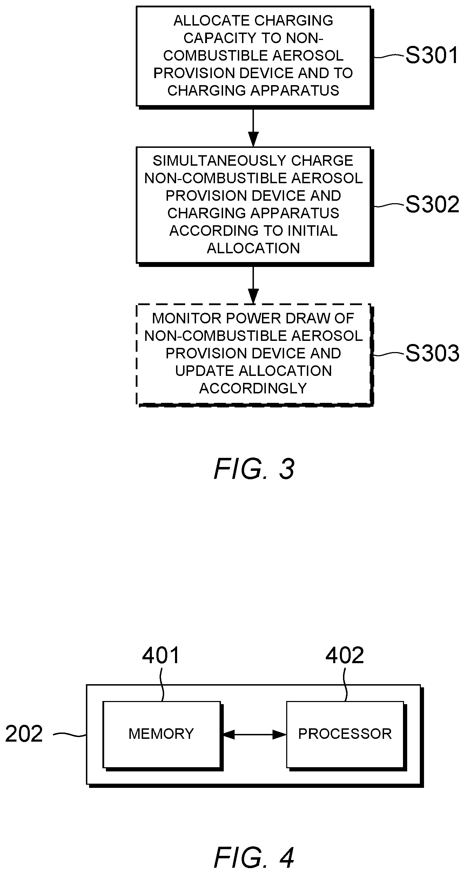

A method of simultaneously charging a first rechargeable power source of a non-combustible aerosol provision device and a second rechargeable power source of a charging apparatus from the same external power supply will now be described with reference to Fig. 3, according to an example embodiment. The method may be implemented by the charging control circuitry 202 of the charging apparatus 200. In other embodiments the method may be performed by one or more entities other than the charging control circuitry 202 (e.g. by an application executed on a smartphone that is paired with the charging apparatus 200).

For example, the charging control circuitry 202 may comprise a controller for directing said electrical power from the external power supply to the non-combustible aerosol provision device 100 and the second rechargeable power source 201, and a method as shown in Fig. 3 may be implemented by the controller of the charging apparatus. In some embodiments the charging apparatus 200 may also comprise a separate controller for controlling one or more functions of the charging apparatus 200, which may be separate from the charging control circuitry 202, and the predefined second initial allocation corresponds to a charging voltage greater than or equal to a minimum operating voltage required by that other controller. However, in some embodiments the same controller may control both the charging operation (i.e. directing electrical power from the external power supply to the non-combustible aerosol provision device 100 and the second rechargeable power source 201) as well as other functions of the charging apparatus 200.

Depending on the embodiment, some or all steps of the method may be implemented in software or in hardware. For example, a hardware implementation may involve an application-specific integrated circuit (ASIC) configured to implement some or all steps of the method. A software implementation may be implemented using apparatus such as that shown in Fig. 4, which represents a software implementation of the charging control circuitry 202 according to an example embodiment. In the embodiment of Fig. 4, the charging control circuitry 202 comprises memory 401 operatively connected to one or more processors 402, such that the one or more processors 402 can load and execute software instructions stored in the memory 401. The memory 401 can comprise any suitable form of computer-readable storage medium, including transitory and non-transitory forms of memory.

The method can be used in a scenario in which one or both of the first and second power interfaces 203, 204 is connected to a respective external power source, which may be same power source for each of the first and second power interfaces 203, 204 or may be different respective external power sources, and in which the charging power source 201 and the power source 101 of the non-combustible aerosol provision device 100 are both in a discharged state. In such a scenario, the method enables a charging operation in which the charging power source 201 and the power source 101 of the non-combustible aerosol provision device 100 are both recharged simultaneously, providing greater convenience for a user compared to having to wait for the power sources 101, 201 to be charged one after the other.

First, in step S301 an available charging capacity of the external power supply is allocated to the non-combustible aerosol provision device 100 and to the charging apparatus 200. Specifically, a first initial allocation is assigned to the non-combustible aerosol provision device 100, and a predefined second initial allocation is assigned to the second rechargeable power source 201 of the charging apparatus 200. The predefined second initial allocation assigned to the second rechargeable power source 201 is less than the first initial allocation assigned to the non-combustible aerosol provision device 100. In some embodiments the predefined second initial allocation is substantially less than the first initial allocation. For example, in some such embodiments the predefined second initial allocation may be less than or equal to 5%, 10%, 15% or 20% of the first initial allocation.

Next, in step S302 simultaneous charging begins of the first and second rechargeable power sources 101, 201, by directing electrical power from the external power supply to the non-combustible aerosol provision device 100 (i.e. for recharging the first rechargeable power source 101) and the second rechargeable power source 201 of the charging apparatus 200 according to the first initial allocation and the second initial allocation, respectively.

Since the predefined second initial allocation assigned to the second rechargeable power source 201 is less than the first initial allocation assigned to the non-combustible aerosol provision device 100, when simultaneous charging begins in step S302 more power is directed to the non-combustible aerosol provision device 100 via the device interface 205 and the charging interface 105. Accordingly, the power source 101 of the non-combustible aerosol provision device 100 is initially charged at a faster rate compared to the power source 201 of the charging apparatus 200. This approach can ensure that the non-combustible aerosol provision device 100 is ready to use more quickly compared to if power was supplied to the first and second rechargeable power sources 101, 201 at equal rates, or if power was initially supplied to the second rechargeable power source 201 (i.e. the charging power source 201 of the charging apparatus 200) at a higher rate than to the non-combustible aerosol provision device 100.

In the present embodiment, once simultaneous charging of the first and second power sources 101, 201 has commenced, in step S303 a level at which the non-combustible aerosol provision device 100 is drawing said electrical power is monitored, to determine an extent to which the non-combustible aerosol provision device 100 is utilising its allocated charging capacity. In step S303, charging either continues charging based on the first initial allocation and the predefined second initial allocation, or the allocations are updated, according to a result of the determination.

If it is determined in step S303 that the non-combustible aerosol provision device 100 is not utilising its allocated charging capacity (e.g. not fully utilising its allocated charging capacity, or not using at least a certain fraction or percentage of its allocated charging capacity), then the allocations are updated by determining an updated second allocation higher than the predefined second initial allocation and an updated first allocation lower than the first initial allocation, thereby allocating additional charging capacity to the charging apparatus. Once the allocations have been updated in step S303, then charging continues based on the updated first allocation and the updated second allocation.

Depending on the embodiment, step S303 may only be performed once while simultaneous charging is ongoing (e.g. at a certain time interval after charging commences), or may be repeatedly performed while simultaneous charging is ongoing (e.g. periodically at regular intervals). In some embodiments step S303 may be omitted, for example, charging may just continue based on the initial allocations until one or both of the first and second power sources 101, 201 is fully charged.

At the same time, by setting the initial allocation for the second rechargeable power source 201 (i.e. the predefined second initial allocation) to a suitable predefined value, it can still be ensured that the second rechargeable power source 201 can be charged to a certain level within a reasonable amount of time. In some embodiments the predefined second initial allocation is substantially less than the first initial allocation. For example, the predefined second initial allocation may correspond to a charging current of about 100 milliamps (mA). In other embodiments the predefined second initial allocation may correspond to a different value of the charging current, including but not limited to 50, 60, 70, 80, 90, 110, 120, 130 140 or 150 mA. Here, the term "correspond to" means that the value of the predefined second initial allocation is a value that causes electrical current to be supplied at the stated level, for example a current between 50 to 150 mA (e.g. 100 mA). Depending on the implementation, the predefined second initial allocation may be expressed as a current value (e.g. in mA), or may be defined in any other suitable form (e.g. as a string or integer value that can be used to retrieve a corresponding current value from a lookup table). As a further example, in some embodiments the predefined second initial allocation may be defined as a predefined portion (e.g. a fraction or a percentage) of a maximum available charging capacity of the external power supply.

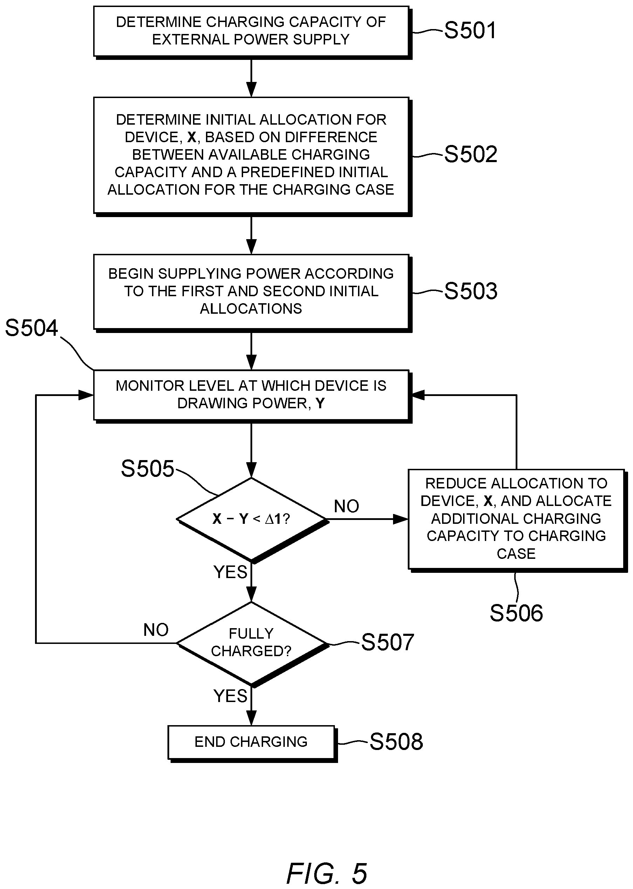

Referring now to Fig. 5, a flowchart is illustrated showing a method of simultaneously charging respective power sources of an aerosol provision device and a charging apparatus in a scenario where the available charging capacity of an external power supply is known to a charging controller, according to an example embodiment. The method of Fig. 5 can be understood as a more detailed embodiment of the method illustrated in Fig. 3. As with the method of Fig. 3, the method of Fig. 5 may be implemented by the charging control circuitry 202 of the charging apparatus 200. In other embodiments the method may be performed by one or more entities other than the charging control circuitry 202 (e.g. by an application executed on a smartphone that is paired with the charging apparatus 200).

First, in step S501 the charging capacity of the external power supply is determined. For example, the charging control circuitry 202 of the charging apparatus 200 may determine the charging capacity of the external power supply by communicating with the external power supply to receive information indicative of the charging capacity, or may identify the external power supply and retrieve stored information indicative of a known charging capacity of the identified external power supply (e.g. from a lookup table stored in memory).

Next, in step S502 the first initial allocation is determined based on a difference between the determined charging capacity and the second initial allocation, which in the present embodiment is predefined. In the present embodiment the charging apparatus 200 is implemented in the form of a carry case for the non-combustible aerosol provision device 100, and as such is referred to as a "charging case" in Fig. 5. Then, in step S503 simultaneous charging of the first and second power sources 101, 201 commences, by supplying power to the non-combustible aerosol provision device 100 and the second power source 201 according to the first and second initial allocations.

In the present embodiment, whilst simultaneous charging is ongoing, in steps S504 to S507 the method periodically checks whether the non-combustible aerosol provision device 100 is utilising its allocated charging capacity and decides whether to reallocate capacity to the second power source 201. Hence, steps S504 to S507 can be understood as representing one possible implementation of step S303 in Fig. 3.

In step S504, a level at which the non-combustible aerosol provision device 100 is drawing said electrical power is monitored. In Fig. 5, the level at which the non-combustible aerosol provision device 100 is drawing said electrical power is denoted as **Y**. Then, in step S505 it is determined to what extent to which the non-combustible aerosol provision device is utilising its allocated charging capacity. Specifically, in the present embodiment in step S505 a difference is determined between the level at which the non-combustible aerosol provision device 100 is drawing said electrical power, **Y,** and a level (denoted as **X**) corresponding to a predetermined utilisation of the first initial allocation (e.g. maximum utilisation of the initial allocation). The difference, **X** - **Y,** is compared to a threshold **Δ1.**

According to the result of the determination in step S505, the method either proceeds to step S506 or S507. If it is determined in step S505 that the difference **X - Y** is less than or equal to **Δ1,** this is taken as an indication that the non-combustible aerosol provision device 100 is utilising its initial allocation to an acceptable extent (i.e. an extent as defined by the threshold **Δ1**). In that scenario, the method continues charging based on the first initial allocation and the predefined second initial allocation, and periodically checks in step S507 whether one or both of the first and second power sources 101, 201 is fully charged. When one of the first and second power sources 101, 201 is fully charged, charging of the other one of the first and second power sources 101, 201 may continue until that power source 101, 201 is also fully charged. Once both of the first and second power sources 101, 201 are fully charged, charging ends in step S508. In other embodiments, however, a different termination condition may be applied (e.g. based on a total time elapsed since the charging begin step S503, or based on a monitored temperature of one or other of the first and second power sources 101, 201).

On the other hand, if in step S505 it is determined that the difference **X - Y** is greater than **Δ1,** it is determined that the non-combustible aerosol provision device 100 is not utilising its initial allocation to an acceptable extent. In other words, in this scenario, the first initial allocation corresponds to a higher level of power than the non-combustible aerosol provision device 100 is able to use, meaning that there is excess capacity available from the external power supply. Accordingly, in this scenario the method proceeds to S506 and determines an updated second allocation higher than the predefined second initial allocation and an updated first allocation lower than the first initial allocation, thereby allocating additional charging capacity to the charging apparatus 200 (i.e. to the second power source 201), and continues charging based on the updated first allocation and the updated second allocation. By reallocating charging capacity to the second power source 201 in this way, the time taken to charge the second power source 201 can be reduced without increasing the time taken to charge the first power source 101 (i.e. since power is only reallocated to the second power source 201 when there is excess charging capacity that is not being used by the non-combustible aerosol provision device 100).

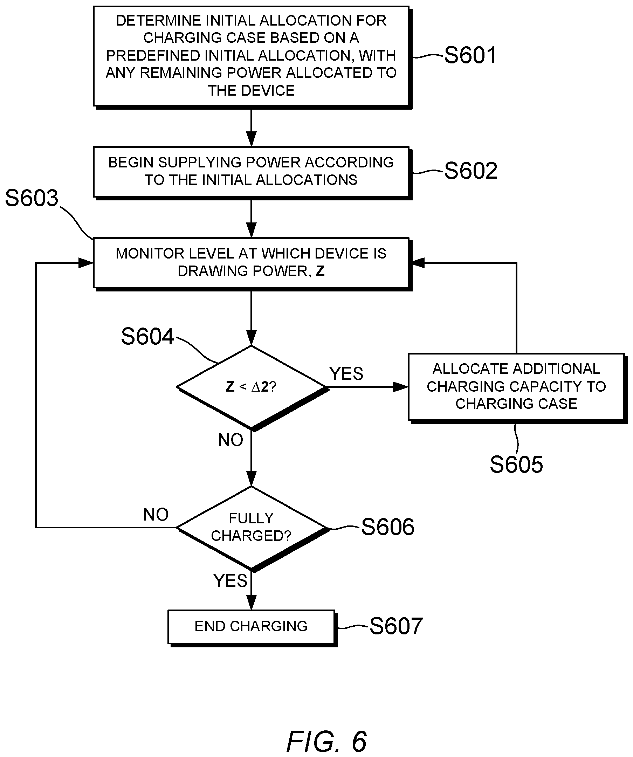

Referring now to Fig. 6, a flowchart is illustrated showing a method of simultaneously charging respective power sources of an aerosol provision device and a charging apparatus in a scenario where the available charging capacity of an external power supply is unknown to a charging controller, according to an example embodiment. The method of Fig. 6 can be understood as a more detailed embodiment of the method illustrated in Fig. 3. As with the method of Fig. 3, the method of Fig. 6 may be implemented by the charging control circuitry 202 of the charging apparatus 200. In other embodiments the method may be performed by one or more entities other than the charging control circuitry 202 (e.g. by an application executed on a smartphone that is paired with the charging apparatus 200).

First, in step S601 the initial allocation for the charging apparatus (referred to as a "charging case" in Fig. 6) is determined based on the predefined initial allocation, for example 100 mA. Since the charging capacity of the external power supply is not known in this embodiment, in step S601 any remaining capacity is automatically allocated to the non-combustible aerosol provision device 100, as opposed to allocating a specific portion of the charging capacity to the non-combustible aerosol provision device 100. The initial allocation for the non-combustible aerosol provision device 100 can therefore be referred to as an "unlimited allocation" in this embodiment.

Next, in step S602 simultaneous charging of the first and second power sources 101, 201 commences, by supplying power to the non-combustible aerosol provision device 100 and the second power source 201 according to the first and second initial allocations. Since the initial allocation for the non-combustible aerosol provision device 100 is unlimited, in practice this means that the non-combustible aerosol provision device 100 is permitted to draw electrical power at a level determined by the non-combustible aerosol provision device 100, as opposed to imposing a limit on the rate at which power may be drawn by the non-combustible aerosol provision device 100.

Next, in step S603 a level at which the non-combustible aerosol provision device 100 is drawing said electrical power is monitored, in a similar manner to step S504 of Fig. 5. In Fig. 6, the level at which the non-combustible aerosol provision device 100 is drawing said electrical power is denoted as **Z**. Then, in step S604 the level at which the non-combustible aerosol provision device 100 is drawing said electrical power (i.e. **Z**) is compared to a threshold **Δ2.** If Z is less than the threshold **Δ2** in step S604, then it is determined that the non-combustible aerosol provision device 100 is not utilising its allocated charging capacity to an acceptable extent. In other words, in this scenario, the remaining charging capacity that was left over after allocating the predefined initial allocation to the charging apparatus 200 (i.e. to the second power source 201) corresponds to a higher level of power than the non-combustible aerosol provision device 100 is able to use, meaning that there is excess capacity available from the external power supply. Accordingly, in this scenario the method proceeds to S605 and determines an updated second allocation higher than the predefined second initial allocation and an updated first allocation lower than the first initial allocation, thereby allocating additional charging capacity to the charging apparatus 200 (i.e. to the second power source 201), and continues charging based on the updated first allocation and the updated second allocation. By reallocating charging capacity to the second power source 201 in this way, the time taken to charge the second power source 201 can be reduced without increasing the time taken to charge the first power source 101 (i.e. since power is only reallocated to the second power source 201 when there is excess charging capacity that is not being used by the non-combustible aerosol provision device 100).

If it is determined in step S604 that **Z** is greater than or equal to **Δ2,** this is taken as an indication that the non-combustible aerosol provision device 100 is utilising its initial allocation to an acceptable extent (i.e. an extent as defined by the threshold **Δ2**). In that scenario, the method continues charging based on the first initial allocation and the predefined second initial allocation.

Then, it is periodically checked in step S606 whether one or both of the first and second power sources 101, 201 is fully charged. When one of the first and second power sources 101, 201 is fully charged, charging of the other one of the first and second power sources 101, 201 may continue until that power source 101, 201 is also fully charged. Once both of the first and second power sources 101, 201 are fully charged, charging ends in step S607. In other embodiments, however, a different termination condition may be applied (e.g. based on a total time elapsed since the charging begin step S602, or based on a monitored temperature of one or other of the first and second power sources 101, 201).

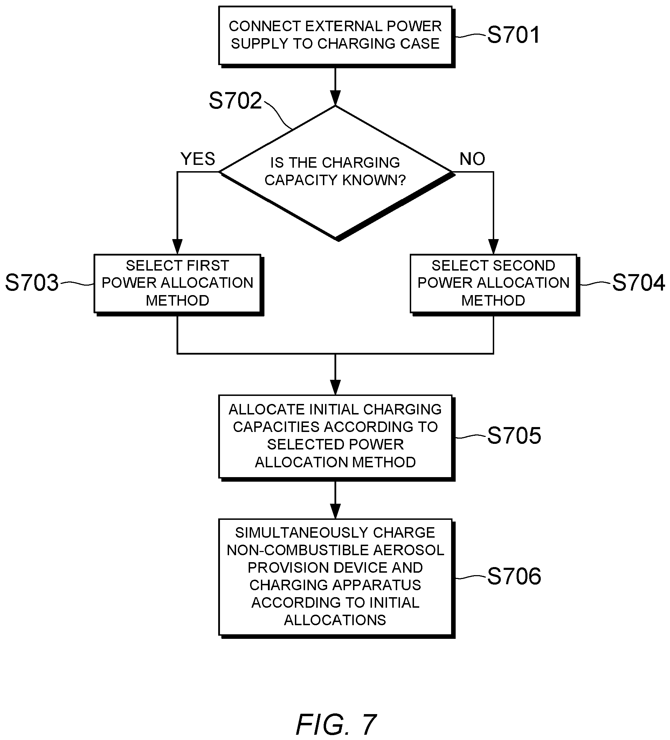

Referring now to Fig. 7, a flowchart is illustrated showing a method of simultaneously charging respective power sources of an aerosol provision device and a charging apparatus according to whether the available charging capacity of an external power supply is known in advance, according to an example embodiment. As with the methods of Fig. 3, 5 and 6, the method of Fig. 7 may be implemented by the charging control circuitry 202 of the charging apparatus 200. In the present embodiment, as described below with reference to Fig. 7, the method is implemented by the charging control circuitry 202 of the charging apparatus 200, but in other embodiments the method may be performed by one or more other entities (e.g. by an application executed on a smartphone that is paired with the charging apparatus 200).

The method starts in step S701, when an external power supply is connected to the charging apparatus 200. Then, in step S702 the charging control circuitry 202 checks whether the charging capacity of the connected external power supply is known, and proceeds to either step S703 or S704 in dependence on whether the charging capacity is known.

Next, in step S705 the charging control circuitry 202 allocates a first portion of said charging capacity of the external power supply to the non-combustible aerosol provision device 100 as a first initial allocation and allocates a second portion of said charging capacity to the second rechargeable power source 201 as a second initial allocation, according to the first or second power allocation method that was selected in either step S703 or S704. In some embodiments, the second initial allocation may be predefined (e.g. as in the method description above with reference to Fig. 5). When the second initial allocation is predefined, the selected power allocation method may comprise determining the first initial allocation based on a difference between the known charging capacity and the predefined second initial allocation.

Then, in step S706 the charging control circuitry 202 begins simultaneously charging the first and second rechargeable power sources 101, 201 by directing electrical power from the external power supply to the non-combustible aerosol provision device 100 and to the second rechargeable power source 201 according to the first initial allocation and the second initial allocation, respectively.

For example, in some embodiments the electrical power is received from the external power supply via one of a plurality of electrical interfaces of the charging apparatus 200, prior to being directed to the non-combustible aerosol provision device 100 and the second rechargeable power source 201. In such embodiments, the first power allocation method or the second power allocation method can be selected in step S702 in dependence on which one of the plurality of electrical interfaces is connected to the external power supply. The plurality of electrical interfaces may comprise first and second electrical interfaces of different types, where the charging capacity can typically be determined for external power supplies connected to one type of electrical interface but not the other. For example, the first electrical interface may comprise a type of interface for which the charging capacity of a connected external power supply can typically be determined (e.g. a wireless electrical interface 203), and the second electrical interface may comprise a type of interface for which the charging capacity typically cannot be determined (e.g. a wired electrical interface 204). For instance in the case of a wireless electrical interface 203, the charging control circuitry 202 may be arranged to communicate with the external power supply (e.g. via the wireless electrical interface 203) to receive information indicative of the charging capacity of the external power supply when connected via the wireless electrical interface.

In other embodiments, a method such as the one shown in Fig. 7 may be implemented even when the charging apparatus 200 only comprises a single electrical interface. For example, when the charging apparatus 200 only comprises a single electrical interface and an external power supply is connected to the electrical interface in step S701, in step S702 the charging control circuitry 202 may check whether the charging capacity of the connected external power supply is known (e.g. by communicating with the external power supply to try to determine its charging capacity).

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc, other than those specifically described herein. In addition, this disclosure may include other inventions not presently claimed, but which may be claimed in future.

Aspects of the present invention are set out below in the following numbered clauses, which form part of the description:
Clause 1. A method of simultaneously charging a first rechargeable power source of a non-combustible aerosol provision device and a second rechargeable power source of a charging apparatus from an external power supply, the charging apparatus comprising an apparatus for charging the first rechargeable power source of the non-combustible aerosol provision device independently of said external power supply, the method comprising:
   selecting a first power allocation method or a second power allocation method in dependence on whether a charging capacity of the external power supply is known;
   allocating a first portion of said charging capacity of the external power supply to the non-combustible aerosol provision device as a first initial allocation and allocating a second portion of said charging capacity to the second rechargeable power source as a second initial allocation, according to the selected first or second power allocation method; and
   simultaneously charging the first and second rechargeable power sources by directing electrical power from the external power supply to the non-combustible aerosol provision device and to the second rechargeable power source according to the first initial allocation and the second initial allocation, respectively.
Clause 2. The method of clause 1, wherein the electrical power is received from the external power supply via one of a plurality of electrical interfaces prior to being directed to the non-combustible aerosol provision device and the second rechargeable power source, and the first power allocation method or the second power allocation method is selected in dependence on which one of the plurality of electrical interfaces is connected to the external power supply.
Clause 3. The method according to clause 1 or 2, wherein the second initial allocation corresponds to a charging current of about 100 milliamps.
Clause 4. The method of any one of clauses 1, 2 or 3, wherein the charging apparatus comprises a first controller for controlling one or more functions of the charging apparatus, and the second initial allocation corresponds to a charging voltage greater than or equal to a minimum operating voltage required by the first controller.
Clause 5. The method according to any one of clauses 1 to 4, wherein the charging apparatus comprises a second controller for directing said electrical power from the external power supply to the non-combustible aerosol provision device and to the second rechargeable power source, and wherein said method is implemented by the second controller.
Clause 6. The method according to clause 5 when dependent on clause 4, wherein the plurality of electrical interfaces comprises at least a first electrical interface and a second electrical interface, the first electrical interface comprising an interface for which said charging capacity is known to the second controller and the second electrical interface comprising an interface for which said charging capacity is unknown to the second controller.
Clause 7. The method according to clause 6, wherein the first power allocation method comprises a method of allocating electrical power between the non-combustible aerosol provision device and the second rechargeable power source according to a known charging capacity of the external power supply, and the first power allocation method is selected in dependence on the external power supply being connected to the first electrical interface.
Clause 8. The method according to clause 6 or 7, wherein the second power allocation method comprises a method of allocating electrical power between the non-combustible aerosol provision device and the second rechargeable power source without knowledge in advance of the charging capacity of the external power supply, and the second power allocation method is selected in dependence on the external power supply being connected to the second electrical interface.
Clause 9. The method according to any one of clauses 6 to 8, wherein the first electrical interface is a wireless electrical interface and the second electrical interface is a wired electrical interface.
Clause 10. The method according to clause 9, wherein the second controller is arranged to communicate with the external power supply to receive information indicative of the charging capacity of the external power supply.
Clause 11. The method according to clause 10, wherein the information indicative of the charging capacity of the wireless electrical interface is received from the external power supply via the wireless electrical interface.
Clause 12. The method according to any one of clauses 1 to 11, wherein the second initial allocation assigned to the second rechargeable power source is less than the first initial allocation assigned to the non-combustible aerosol provision device.
Clause 13. The method according to any one of clauses 1 to 12, wherein the second initial allocation is predefined.
Clause 14. The method according to clause 13, wherein the first power allocation method comprises determining the first initial allocation based on a difference between the known charging capacity and the predefined second initial allocation. Clause 15. The method according to clause 13 or 14, wherein the predefined second initial allocation comprises a predefined portion of said charging capacity.
Clause 16. The method according to clause 15, wherein the predefined portion is defined as a percentage of the charging capacity.
Clause 17. The method according to any one of clauses 13 to 16, wherein the first initial allocation is an unlimited allocation such that during the simultaneous charging, the second controller supplies the electrical power to the charging apparatus according to the second initial allocation and permits the non-combustible aerosol provision device to draw electrical power at a level determined by the non-combustible aerosol provision device.
Clause 18. The method according to any one of clauses 1 to 17, further comprising:
   whilst said simultaneous charging is ongoing, monitoring a level at which the non-combustible aerosol provision device is drawing said electrical power to determine an extent to which the non-combustible aerosol provision device is utilising its allocated charging capacity; and
   according to a result of the determination:
      continuing charging based on the first initial allocation and the predefined second initial allocation; or
      determining an updated second allocation higher than the predefined second initial allocation and an updated first allocation lower than the first initial allocation, thereby allocating additional charging capacity to the charging apparatus, and continuing charging based on the updated first allocation and the updated second allocation.
Clause 19. The method according to clause 18, wherein determining the extent to which the non-combustible aerosol provision device is utilising its allocated charging capacity comprises comparing the level at which the non-combustible aerosol provision device is drawing said electrical power to a first threshold, and
   wherein charging is continued based on the first initial allocation and the predefined second initial allocation in response to a determination that the level at which the non-combustible aerosol provision device is drawing said electrical power is above the first threshold.
Clause 20. The method according to clause 18, wherein determining the extent to which the non-combustible aerosol provision device is utilising its allocated charging capacity comprises determining a difference between the level at which the non-combustible aerosol provision device is drawing said electrical power and a level corresponding to maximum utilisation of the first initial allocation, and comparing said difference to a second threshold, and
   wherein charging is continued based on the first initial allocation and the predefined second initial allocation in response to a determination that said difference is below the second threshold.
Clause 21. A computer program comprising software instructions which, when executed on one or more processors, cause performance of a method according to any one of clauses 1 to 20.
Clause 22. A non-transitory computer-readable storage medium arranged to store a computer program according to clause 21.
Clause 23. A charging controller for simultaneously charging a first rechargeable power source of a non-combustible aerosol provision device and a second rechargeable power source of a charging apparatus from an external power supply, the charging apparatus comprising an apparatus for charging the first rechargeable power source of the non-combustible aerosol provision device independently of said external power supply, wherein, in use, the charging controller is configured to:
   select a first power allocation method or a second power allocation method in dependence on whether a charging capacity of the external power supply is known;
   allocate a first portion of said charging capacity of the external power supply to the non-combustible aerosol provision device as a first initial allocation and allocate a second portion of said charging capacity to the second rechargeable power source as a second initial allocation, according to the selected first or second power allocation method; and
   simultaneously charge the first and second rechargeable power sources by directing electrical power from the external power supply to the non-combustible aerosol provision device and to the second rechargeable power source according to the first initial allocation and the second initial allocation, respectively.
Clause 24. A charging apparatus for recharging a first rechargeable power source of a non-combustible aerosol provision device, the charging apparatus comprising:
   a charging controller according to clause 23; and
   the second rechargeable power source.

## Claims

1. A method of simultaneously charging a first rechargeable power source of a non-combustible aerosol provision device and a second rechargeable power source of a charging apparatus from an external power supply, the charging apparatus comprising an apparatus for charging the first rechargeable power source of the non-combustible aerosol provision device independently of said external power supply, the method comprising:
allocating a charging capacity of the external power supply to the non-combustible aerosol provision device and to the charging apparatus, by assigning a first initial allocation to the non-combustible aerosol provision device and assigning a predefined second initial allocation to the second rechargeable power source; and
simultaneously charging the first and second rechargeable power sources by directing electrical power from the external power supply to the non-combustible aerosol provision device and the second rechargeable power source according to the first initial allocation and the second initial allocation, respectively,
wherein the predefined second initial allocation assigned to the second rechargeable power source is less than the first initial allocation assigned to the non-combustible aerosol provision device.

2. The method according to claim 1, wherein the predefined second initial allocation is substantially less than the first initial allocation.

3. The method according to claim 1 or 2, wherein the charging apparatus comprises a first controller for controlling one or more functions of the charging apparatus, and the predefined second initial allocation corresponds to a charging voltage greater than or equal to a minimum operating voltage required by the first controller, and/or
wherein the predefined second initial allocation corresponds to a charging current of about 100 milliamps, and/or
wherein said electrical power is supplied to the non-combustible aerosol provision device via a first electrical interface, and said electrical power is received from the external power supply via a second electrical interface.

4. The method according to any one of claims 1 to 3, wherein the charging apparatus comprises a second controller for directing said electrical power from the external power supply to the non-combustible aerosol provision device and to the second rechargeable power source, and wherein said method is implemented by the second controller.

5. The method according to claim 4, wherein said charging capacity of the external power supply is known to the second controller.

6. The method according to claim 5, wherein the first initial allocation is determined based on a difference between said charging capacity and the predefined second initial allocation, and/or
wherein the predefined second initial allocation comprises a predefined portion of said charging capacity, optionally wherein the predefined portion is defined as a percentage of the charging capacity.

7. The method according to claim 4, wherein said charging capacity of the external power supply is not known to the second controller.

8. The method according to claim 7, wherein the first initial allocation is an unlimited allocation such that during the simultaneous charging, the second controller supplies the electrical power to the second rechargeable power source according to the second initial allocation and permits the non-combustible aerosol provision device to draw electrical power at a level determined by the non-combustible aerosol provision device.

9. The method according to any one of claims 1 to 8, further comprising:
whilst said simultaneous charging is ongoing, monitoring a level at which the non-combustible aerosol provision device is drawing said electrical power to determine an extent to which the non-combustible aerosol provision device is utilising its allocated charging capacity; and
according to a result of the determination:
continuing charging based on the first initial allocation and the predefined second initial allocation; or
determining an updated second allocation higher than the predefined second initial allocation and an updated first allocation lower than the first initial allocation, thereby allocating additional charging capacity to the charging apparatus, and continuing charging based on the updated first allocation and the updated second allocation.

10. The method according to claim 9, wherein determining the extent to which the non-combustible aerosol provision device is utilising its allocated charging capacity comprises comparing the level at which the non-combustible aerosol provision device is drawing said electrical power to a first threshold, and
wherein charging is continued based on the first initial allocation and the predefined second initial allocation in response to a determination that the level at which the non-combustible aerosol provision device is drawing said electrical power is above the first threshold.

11. The method according to claim 9, wherein determining the extent to which the non-combustible aerosol provision device is utilising its allocated charging capacity comprises determining a difference between the level at which the non-combustible aerosol provision device is drawing said electrical power and a level corresponding to a predetermined utilisation of the first initial allocation, and comparing said difference to a second threshold, and
wherein charging is continued based on the first initial allocation and the predefined second initial allocation in response to a determination that said difference is below the second threshold.

12. A computer program comprising software instructions which, when executed on one or more processors, cause performance of a method according to any one of claims 1 to 11.

13. A non-transitory computer-readable storage medium arranged to store a computer program according to claim 12.

14. A charging controller for simultaneously charging a first rechargeable power source of a non-combustible aerosol provision device and a second rechargeable power source of a charging apparatus from the same external power supply, the charging apparatus comprising an apparatus for charging the first rechargeable power source of the non-combustible aerosol provision device independently of said external power supply, wherein, in use, the charging controller is configured to:
allocate a charging capacity of the external power supply to the non-combustible aerosol provision device and to the charging apparatus, by assigning a first initial allocation to the non-combustible aerosol provision device and assigning a predefined second initial allocation to the second rechargeable power source; and
simultaneously charge the first and second rechargeable power sources by directing electrical power from the external power supply to the non-combustible aerosol provision device and to the second rechargeable power source according to the first initial allocation and the second initial allocation, respectively,
wherein the predefined second initial allocation assigned to the second rechargeable power source is less than the first initial allocation assigned to the non-combustible aerosol provision device.

15. A charging apparatus for recharging a first rechargeable power source of a non-combustible aerosol provision device, the charging apparatus comprising:
a charging controller according to claim 14; and
the second rechargeable power source.
